(19) **Europäisches Patentamt**
**European Patent Office**
**Office européen des brevets**

(11) **EP 4 715 508 A1**

(12) **EUROPEAN PATENT APPLICATION**

(43) Date of publication:
25.03.2026 Bulletin 2026/13

(21) Application number: 25203050.7

(22) Date of filing: 18.09.2025

(51) International Patent Classification (IPC):
$G05D\ 1/243^{(2024.01)}$ $G05D\ 1/495^{(2024.01)}$

(52) Cooperative Patent Classification (CPC):
G05D 1/2465; B62D 57/032; G05D 1/2435;
G05D 1/495; G05D 2101/15; G05D 2107/30;
G05D 2109/12

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 20.09.2024 CN 202411322767

(71) Applicant: Beijing Youzhuju Network Technology
Co., Ltd.
Beijing 101299 (CN)

(72) Inventors:
• LAI, Hang
Beijing, 100028 (CN)
• XU, Jiafeng
100028 Beijing (DE)
• WU, Hongtao
Beijing, 100028 (CN)
• KONG, Tao
Beijing, 100028 (CN)

(74) Representative: **Grünecker Patent- und**
**Rechtsanwälte**
**PartG mbB**
**Leopoldstraße 4**
**80802 München (DE)**

(54) **MOTION CONTROL METHOD FOR LEGGED ROBOTS, ELECTRONIC DEVICE, AND NON-TRANSITORY COMPUTER-READABLE MEDIUM**

(57) The present application provides a motion control method for legged robots, an electronic device, and a non-transitory computer-readable storage medium. The motion control method includes: obtaining state information, encoded information, and historical actions of the legged robot at a previous moment, as well as first perception information at a current moment; inputting the state information, the encoded information, and the historical actions at the previous moment into a world model to obtain state information at the current moment output from the world model; inputting the state information and the first perception information at the current moment into a motion strategy model to obtain a target action at the current moment output from the motion strategy model; and controlling a motion of the legged robot according to the target action at the current moment.

Fig. 1

## Description

This application claims the priority to and benefits of the Chinese Patent Application No. 202411322767.6, which was filed on September 20, 2024. The aforementioned patent application is hereby incorporated by reference in its entirety.

## TECHNICAL FIELD

Embodiments of the present application relate to a motion control method for legged robots, an electronic device, and a non-transitory computer-readable medium.

## BACKGROUND

Legged robots are robots capable of simulating the movement of human or animal feet. They may be applied in various fields, such as industrial inspection, express delivery, and household services, allowing them to replace humans in hazardous or hard-to-reach areas to perform tasks, thereby reducing risks to personnel and increasing work efficiency.

Typically, legged robots need to perceive their surrounding environment and control their movement based on the perceived information. In related arts, legged robots utilize data from different sensors within their built-in sensor systems to sense their surroundings, thereby controlling their movement. For example, parameters such as the pose, angular velocity, acceleration, and gravity projection of legged robots are obtained through an inertial measurement unit (IMU), while joint encoders are used to acquire joint angles, angular velocities and so on. The aforementioned built-in sensor system refers to a system that does not include vision-based or LiDAR sensors.

The aforementioned motion control method may effectively handle common terrains such as slopes and flat ground. However, for environments with complex terrains, such as narrow passages, deep pits, or deep holes, the inability to accurately perceive these complex terrains may lead to errors in motion control, causing problems such as the legged robot falling down or even suffering from motion failures, which will affect the motion control effect of the legged robot.

## SUMMARY

Embodiments of the present application provide a motion control method for legged robots, a device, and a medium, enabling accurate perception of any terrain environment, thereby ensuring the stability of the legged robot during motion, avoiding problems such as falling down or motion failures, and improving the motion control effect of he legged robot.

An embodiment of the present application provides a motion control method for legged robots, including:

   obtaining state information, encoded information, and historical actions of the legged robot at a previous moment, as well as first perception information at a current moment;
   inputting the state information, the encoded information, and the historical actions at the previous moment into a world model to obtain state information at the current moment output from the world model;
   inputting the state information and the first perception information at the current moment into a motion strategy model to obtain a target action at the current moment output from the motion strategy model; and
   controlling a motion of the legged robot according to the target action at the current moment.

An embodiment of the present application provides a motion control apparatus for legged robots, including:

   an information obtaining module for obtaining state information, encoded information, and historical actions of the legged robot at a previous moment, as well as first perception information at a current moment;
   an information determination module for inputting the state information, the encoded information, and the historical actions at the previous moment into a world model to obtain state information at the current moment output from the world model;
   an action determination module for inputting the state information and the first perception information at the current moment into a motion strategy model to obtain a target action at the current moment output from the motion strategy model; and
   a motion control module for controlling a motion of the legged robot according to the target action at the current moment.

An embodiment of the present application provides an electronic device, including:
at least one processor and a memory, where the at least one memory is configured to store a computer program, and the at least one processor is configured to invoke and run the computer program stored in the memory to execute the motion control method for legged robots as described in the aforementioned embodiment and its various implementations.

An embodiment of the present application provides a non-transitory computer-readable storage medium for storing a computer program that causes a computer to execute the motion control method for legged robots as described in the aforementioned embodiment and its various implementations.

An embodiment of the present application provides a computer program product containing program instructions which, when run on an electronic device, enable the electronic device to execute the motion control method for legged robots as described in the aforementioned embodiment and its various implementations.

BRIEF DESCRIPTION OF DRAWINGS

In order to explain the technical solution in the embodiments of the application more clearly, the drawings used in the description of the embodiments will be briefly introduced below. Obviously, the drawings in the following description are only some embodiments of the application, and for those of ordinary skill in the field, other drawings may be obtained according to these drawings without paying creative labor.

Fig. 1 is a schematic diagram of a legged robot according to an embodiment of the present application;
Fig. 2 is a schematic diagram of a world model training scenario according to an embodiment of the present application;
Fig. 3 is a schematic diagram of a world model training process according to an embodiment of the present application;
Fig. 4 is a schematic diagram of a network architecture of a world model according to an embodiment of the present application;
Fig. 5 is a schematic diagram of another world model training process according to an embodiment of the present application;
Fig. 6 is a schematic diagram of a motion strategy model training process according to an embodiment of the present application;
Fig. 7 is a schematic diagram for determining motion actions of a legged robot based on a world model and a motion strategy model according to an embodiment of the present application;
Fig. 8 is a flowchart of a motion control method for legged robots according to an embodiment of the present application;
Fig. 9 is a schematic diagram for determining a target action of a legged robot based on a world model and a motion strategy model according to an embodiment of the present application;
Fig. 10 is a flowchart of the process for obtaining encoding information of a legged robot at a previous moment according to an embodiment of the present application;
Fig. 11 is a schematic diagram of an encoding module in a world model according to an embodiment of the present application;
Fig. 12 is a schematic block diagram of a motion control apparatus for legged robots according to an embodiment of the present application; and
Fig. 13 is a schematic block diagram of an electronic device according to an embodiment of the present application.

DETAILED DESCRIPTION

The technical solution in the embodiments of the present application will be clearly and completely described below in combination with attached drawings. Obviously, the described embodiments are only part of the embodiments of the present application, not all of them. Based on the embodiments of the present application, all other embodiments obtained by those of ordinary skill in the art without making creative labor belong to the scope of protection of the present application.

It should be noted that the terms "first" and "second" in the specification and claims of the present application and the drawings are used to distinguish similar objects, and are not necessarily used to describe a specific order or sequence. It should be understood that the data thus used are interchangeable under appropriate circumstances, so that the embodiments of the present application described herein may be implemented in other orders than those illustrated or described herein. Furthermore, the terms "comprise" and "have" and any variations thereof are intended to cover non-exclusive inclusion, for example, a process, method, system, product or server that includes a series of steps or units is not necessarily limited to those explicitly listed, and may include other steps or units not explicitly listed or inherent to such process, method, product or device.

In the embodiments of the application, terms such as "exemplary" or "for example" are used to indicate examples or instances for illustration or explanation. Any embodiment or solution disclosed as "exemplary" or "for example" in the embodiments of the application should not be interpreted as being more preferred or advantageous than other embodiments or solutions. Rather, terms such as "exemplary" or "for example" are intended to present relevant concepts in a specific manner.

In the description of the embodiments of the present application, unless otherwise specified, "multiple" refers to two or more, that is, at least two; "at least one" refers to one or more; and "any" refers to any one or several.

In related arts, legged robots utilize data from different sensors within their built-in sensor systems to sense their surroundings, and control their own motion accordingly. The built-in sensor system here refers to a system that does not include vision-based or LiDAR sensors. The aforementioned motion control method may effectively handle common terrains such as slopes, flat ground and so on. The above-mentioned motion control method may effectively deal with common terrains such as slopes and flat ground, but for environments with complex terrains, such as uncommon terrains like narrow passages, deep pits, or deep holes, due to inability to accurately perceive these complex terrains, errors will occur in motion control, causing problems such as the legged robot falling down or even suffering from motion failures, which will affect the motion control effect of the legged robots.

In view of the above technical problems, the present application provides a motion control method for legged robots, a device, and a medium, which aims to address the problems that are caused by inaccurate perception of complex terrains, such as narrow passages, deep pits, or deep holes, which may lead to errors in motion control, causing the legged robot to fall down or experience motion failures, thereby affecting the motion control effect of legged robots.

It should be understood that the legged robot in the present application may include at least one leg mechanism, with each leg mechanism including at least one joint, and each joint may correspondingly be equipped with a drive motor. In other words, the legged robot may be a single-legged robot, a dual-legged robot, a four-legged robot, a six-legged robot, etc., and the present application imposes no limitations on the number of leg mechanisms of the legged robot.

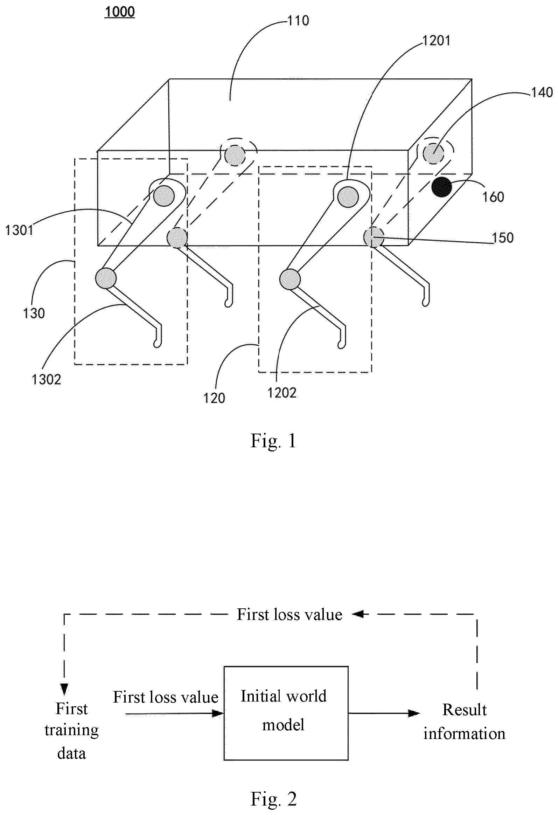

For example, as shown in Fig. 1, assuming the legged robot is a four-legged robot, the four-legged robot 1000 may include a robot body 110, two front leg mechanisms 120, and two rear leg mechanisms 130. The two front leg mechanisms 120 may be a left front leg mechanism and a right front leg mechanism, and the two rear leg mechanisms 130 may be a left rear leg mechanism and a right rear leg mechanism.

The two front leg mechanisms 120 may each include a thigh mechanism 1201 and a calf mechanism 1202, and the two rear leg mechanisms 130 may each include a thigh mechanism 1301 and a calf mechanism 1302. The thigh mechanisms 1201 and 1301 are each connected to the robot body 110 via a hip joint 140, and the calf mechanisms 1202 and 1302 are each connected to the corresponding thigh mechanisms 1201 and 1301 through a knee joint 150.

Additionally, each hip joint 140 and each knee joint 150 are respectively equipped with a drive motor. That is, each hip joint 140 corresponds to a hip joint drive motor, and each knee joint 150 corresponds to a knee joint drive motor. In this way, torque can be output to the corresponding joints through the drive motors, facilitating the variation in at least one of the hip and knee joints for motion control of the legged robot.

Following the introduction of the physical structure of the legged robot, the technical solution presented in the embodiments of the present application will be described in detail with specific embodiments. The following embodiments may be combined with each other, and the same or similar concepts or processes may not be repeated in some embodiments.

It should be understood that the technical solution according to the embodiments of the present application may include a model training part and a model application part. The models involved in the embodiments of the present application include a world model and a motion strategy model.

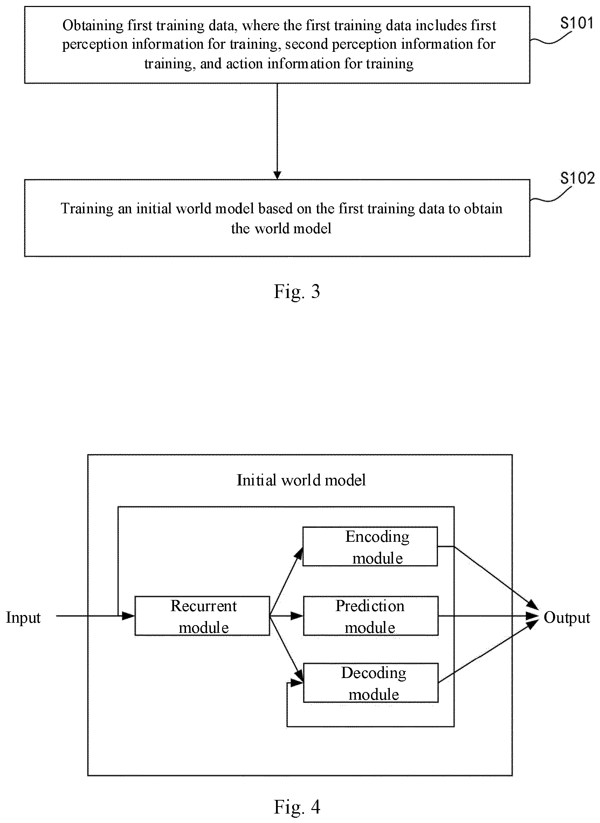

The following will provide a detailed description of the model training process involved in the embodiments of the present application. First, a specific description of the training process for the world model will be provided. Fig. 2 is a schematic diagram of a world model training scenario according to an embodiment of the present application, and Fig. 3 is a schematic diagram of a world model training process according to an embodiment of the present application. In the embodiments of the present application, the training of the world model may be executed by a motion control apparatus for legged robots. In some embodiments, the motion control apparatus for legged robots may consist of hardware and/or software and may be integrated within electronic devices. In the present application, the electronic devices may be, but not limited to, legged robots and hardware devices used to control the legged robots, such as tablets, desktop computers, simulators, etc., with no restrictions on the types of hardware devices for controlling the legged robots.

As shown in Fig. 3, the method may include the following steps S101 and S102.

At step S101, first training data is obtained, where the first data including first perception information for training, second perception information for training, and action information for training.

In the present application, the first perception information for training, the second perception information for training, and the action information for training refer to data required for training the world model, respectively.

Here, the first perception information for training may refer to proprioception information, that is the perceptual data acquired by different sensors in the built-in sensor system of the legged robot. The built-in sensor system refers to a system that does not include vision-based or LiDAR sensors.

The second perception information for training may refer to depth images acquired by a depth camera mounted on the legged robot. Specifically, the legged robot in the present application is further equipped with at least one depth camera 160, which is configured to acquire depth images for perceiving the surrounding environment. As shown in Fig. 1, the depth camera 160 may be installed on the robot body 110 of the legged robot.

In some optional embodiments, the obtaining of the first perception information for training, the second perception information for training, and the action information for training may be achieved through at least one of the following approaches.

In the first approach, the legged robot is controlled to move in a real environment. During this motion, different sensors in the built-in sensor system of the legged robot are configured to obtain first perception information as the first perception information for training. Additionally, second perception information is obtained through the depth camera on the legged robot, as the second perception information for training. Further, the motion information of the legged robot in the real environment is obtained as the action information for training.

In the second approach, a simulation environment (i.e., a simulated environment) is created in simulation software, corresponding depth maps are generated by simulating scenes under different lighting conditions, materials, and viewpoints, and the depth maps serve as the second perception information for training. At the same time, the motion of the legged robot is simulated in the simulation environment, and during the motion, the first perception information is obtained through different sensors in the built-in sensor system of the legged robot, which is used as the first perception information for training. Further, the motion information during the motion of the legged robot is also obtained and used as the action information for training.

In addition to the aforementioned two approaches, other approaches may also be employed to obtain the first perception information for training, the second perception information for training, and the action information for training, without any restrictions specified here.

After obtaining the first perception information for training, the second perception information for training, and the action information for training, first training data may be obtained based on the first perception information for training, the second perception information for training, and the action information for training.

It is important to note that the first training data may include multiple sets of training data, with each set including first perception information for training, second perception information for training, and action information for training. This is, each set of training data includes one piece of first perception information for training, one piece of second perception information for training corresponding to the first perception information for training, and one piece of action information for training.

At step S102, an initial world model is trained based on the first training data to obtain the world model.

In the present application, the initial world model refers to a world model in which network parameters have not been adjusted. In other words, the initial world model is a world model in a state to be trained. The initial world model may be any network model that supports the generation of state information for the legged robot.

Optionally, training the initial world model to obtain the world model may include the following steps 1 to 2.

At step 1, the first training data is input into the initial world model to obtain result information output by the initial world model.

At step 2, the initial world model is trained based on the result information to obtain the world model.

In some optional embodiments, after obtaining the first training data, the initial world model may process the first training data and output corresponding processing results. Subsequently, a first loss value may be calculated based on the processing results. Then, a comparison is made to determine whether the first loss value is less than a first preset value. In response to the first loss value being less than the first preset value, it indicates that the initial world model has performed well in processing the first training data, that is, the initial world model has achieved the expected results. At this point, the training operation on the initial world model may be concluded, and the initial world model may be designated as the final world model. Conversely, in response to the first loss value being greater than or equal to the first preset value, it indicates that the initial world model has performed poorly in processing the first training data, that is, the initial world model has not met the expected effect. In this case, it is determined that the training of the initial world model is not yet complete, and the training may continue based on the first training data, so as to reduce the first loss value by increasing the number of iterations or adjusting training parameters, such as the quantity of the first training data, to ensure that the latest trained world model corresponds to a first loss value that is less than the first preset value.

In the present application, the first preset value is an adjustable parameter that may be set based on the prediction accuracy of the world model, with no restrictions thereon.

In some optional embodiments, during the training process of the initial world model, the first loss value corresponding to the trained world model may tend to a stable value after multiple iterations, that is, the variation in the first loss value is very small or fluctuates within a certain range. At this time, it may be determined that the training of the initial world model is converging, and then the latest trained world model may be determined as the final world model.

It should be understood that the training of the initial world model in the present application specifically refers to adjusting network parameters within the initial world model, such as adjusting weights and other parameters of the initial world model.

According to the technical solution disclosed in the embodiments of the present application, the first training data for training the world model is obtained, and subsequently the initial world model is trained based on the first training data to obtain the world model. Based on this world model, the state information of the legged robot may be obtained. Further, based on this state information, the execution actions of the legged robot may be determined. Thus, the motion of the legged robot may be accurately controlled based on this execution action, thereby improving the motion control effect of the legged robot.

In some embodiments, as shown in Fig. 4, the initial world model in the present application may include a recurrent module, an encoding module, a prediction module, and a decoding module. An output end of the recurrent module is connected to an input end of the encoding module, an input end of the prediction module, and an input end of the decoding module. An output end of the encoding module is connected to an input end of the recurrent module and the input end of the decoding module.

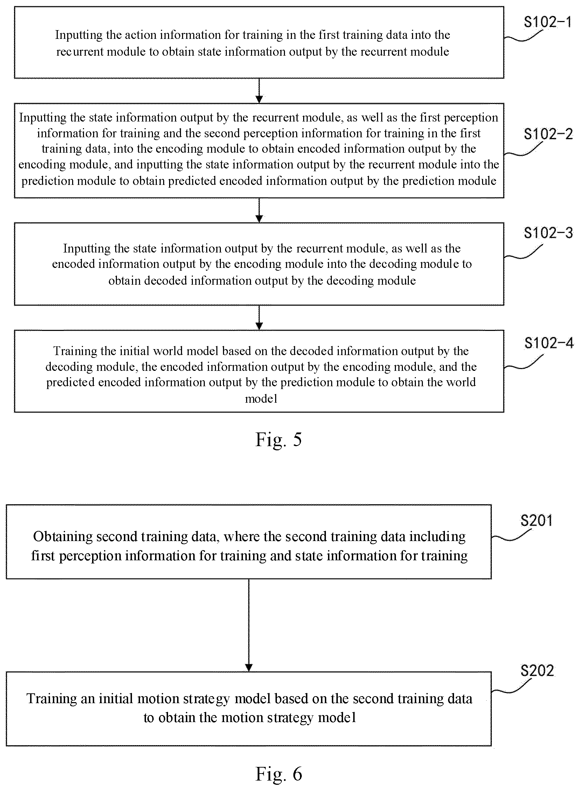

Based on the network model structure shown in Fig. 4, the step S102 may include the following steps S102-1 to S102-5 as illustrated in Fig. 5.

At step S102-1, the action information for training in the first training data is input into the recurrent module, and state information output by the recurrent module is obtained.

The recurrent module is used to determine the state information of the legged robot at different moments. In the present application, the state information may be denoted as h.

In some optional embodiments, the action information for training in the first training data may be input as input data into the recurrent module, allowing the recurrent module to process the action information for training, so as to obtain the state information corresponding to the action information for training.

Considering that the first training data may include multiple sets of training data, where each set of training data may correspond to different moments, and the implementation principle for the training process of each set of training data is the same, for the sake of clarity, the present application provides an explanation using the action information for training from one set of training data in the first training data as an example. In some optional embodiments, during each training process, one piece of action information for training from one set of training data may be input into the initial world model or the trained world model, and after the set of training data has been trained, one piece of action information for training from the next set of training data may be input for training.

In other words, the present application allows for the input of action information for training from one set of training data at a time during the training of the world model, enabling the recurrent module to process the action information for training from the set of training data, so as to obtain the state information corresponding to the action information for training.

At step S102-2, the state information output by the recurrent module, along with the first perception information for training and second perception information for training in the first training data, are input into the encoding module, and encoded information output by the encoding module is obtained, and the state information output by the recurrent module is input into the prediction module and predicted encoded information output by the prediction module is obtained.

The encoding module is used to determine random state information. Specifically, the encoding information output by the encoding module based on the state information output by the recurrent module, as well as the first perception information for training and second perception information for training in the first training data is random state information. In the present application, the random state information may be denoted as z.

The prediction module is used to dynamically predict the random state information, that is, the predicted encoded information output by the prediction module based on the state information output by the recurrent module is predicted random state information. In the present application, the predicted random state information may be denoted as $\hat{z}$.

In some optional embodiments, obtaining, by the encoding module, the encoding information based on the state information output by the recurrent module, as well as the first perception information for training and perception information for training in the first training data may be realized through the following formula (1):

$$z_t \sim q_\phi\left(\bullet \,|\, h_t, o_t\right) \quad \ldots\ldots\ldots\ldots\ldots (1)$$

Where $z_t$ represents the encoded information at moment t output by the encoding module; ~ indicates sampling from $q_\phi(\bullet|h_t,o_t)$, that is, the encoding information $z_t$ at moment t is obtained from $q_\phi(\bullet|h_t,o_t)$; $q_\phi$ represents an encoding distribution function; • represents encoding distribution; $h_t$ represents the state information at moment t, and $o_t$ represents fused perception information at moment t; the state information $h_t$ represents information output by the recurrent module, and the fused perception information $o_t$ may be obtained by fusing the first perception information for training and perception information for training at moment t from the first training data, i.e., $o_t = \left(o_t^p, d_t\right)$, where $o_t^p$ represents the first perception information for training at moment t, and $d_t$ represents the second perception information for training at moment t.

It should be understood that fused perception information $o_t$ may also be referred to as fused observation information, and there are no restrictions thereon.

In some optional embodiments, obtaining, by the prediction module, the predicted encoded information based on the state information output by the recurrent module may be realized through the following formula (2):

$$\hat{z}_t \sim p_\phi\left(\bullet | h_t\right) \quad \ldots\ldots\ldots \ (2)$$

where $\hat{z}_t$ represents the predicted encoded information at moment t output by the prediction module; ~ indicates sampling from $p_\phi(\bullet|h_t)$, that is, the predicted encoded information $\hat{z}_t$ at moment t is obtained from $p_\phi(\bullet|h_t)$; $p_\phi$ represents a prediction distribution function; • represents prediction distribution; and $h_t$ represents the state information at moment t, and the state information $h_t$ represents information output by the recurrent module.

At step S102-3, the state information output by the recurrent module, along with the encoded information output by the encoding module, is input into the decoding module, and decoded information output by the decoding module is obtained.

The decoding module is configured to perform data restoration based on the state information output by the recurrent module and the encoded information output by the encoding module, in order to obtain restored perception information. That is, the decoded information output by the decoding module is the restored perception information. In the present application, the restored perception information may be denoted as $\hat{o}$.

In some optional embodiments, obtaining, by the decoding module, the decoded information based on the state information output by the recurrent module and the encoded information output by the encoding module may be realized through the following formula (3):

$$\hat{o}_t \sim p_\phi\left(\bullet | h_t, z_t\right) \quad \ldots\ldots\ldots\ldots\ldots\ldots \ (3)$$

where $\hat{o}_t$ represents the decoded information at moment t output by the decoding module; ~ represents sampling from $p_\phi(\bullet|h_t, z_t)$, that is, the decoded information $\hat{o}_t$ at moment t is obtained from $p_\phi(\bullet|h_t, z_t)$; $p_\phi$ represents a prediction distribution function; • represents prediction distribution; $h_t$ represents the state information at moment t, and the state information $h_t$ is information output by the recurrent module; and $z_t$ represents the encoded information at moment t output by the encoding module.

In the present application, the decoded information at moment t is $\hat{o}_t = \left(\hat{o}_t^p, \hat{d}_t\right)$, where $\hat{o}_t^p$ represents first restored perception information at moment t, and $\hat{d}_t$ represents second restored perception information at moment t.

At step S102-4, the initial world model is trained based on the decoded information output by the decoding module, the encoded information output by the encoding module, and the predicted encoded information output by the prediction module, and the world model is obtained.

In some optional embodiments, the first loss value may be calculated based on the decoded information output by the decoding module, the encoded information output by the encoding module, and the predicted encoded information output by the prediction module. Subsequently, the initial world model is subjected to reverse training based on the first loss value to adjust the network parameters within the initial world model, resulting in the final world model.

Optionally, the first loss value may be calculated through the following formula (4), based on the decoded information output by the decoding module, the encoded information output by the encoding module, and the predicted encoded information output by the prediction module:

$$L(\phi) \doteq E_{q_\phi}\left[\sum_{t=0}^{T} -\ln \hat{o}_t + \beta KL\left[z_t \| \hat{z}_t\right]\right] \quad \ldots\ldots\ldots\ldots\ldots\ldots \ (4)$$

where $L(\phi)$ represents the first loss value; $E$ represents an expectation function; $q_\phi$ represents an encoding distribution function; t represents moment t; $\hat{o}_t$ represents the decoded information at moment t output by the decoding module; $\beta$ represents a weight value, which is an adjustable parameter; KL (Kullback-Leibler Divergence) represents a KL divergence function; $z_t$ represents the encoded information at moment t output by the encoding module; and $\hat{z}_t$ represents the predicted encoded information at moment t output by the prediction module.

Based on the previous formulas (1) to (3), the formula (4) may be transformed to yield formula (5):

$$L\left(\phi\right) \doteq E_{q_{\phi}}\left[\sum_{t=0}^{T} -\ln p_{\phi}(o_t \mid z_t, h_t) + \beta KL\left[q_{\phi}\left(\cdot \mid h_t, o_t\right) \| p_{\phi}\left(\cdot \mid h_t\right)\right]\right]$$ ................. (5)

In some optional embodiments, performing reverse training on the initial world model based on the first loss value to adjust the network parameters within the initial world model, resulting in the final world model, may include the following first to third steps.

At the first step, determining whether the first loss value is less than the first preset value, proceeding to the second step in response to the first loss value being greater than or equal to the first preset value, and proceeding to the third step in response to the first loss value being less than the first preset value.

At the second step, in response to the first loss value being greater than or equal to the first preset value, it indicates that the processing result output by the initial world model is poor, that is, the training of the world model is not yet complete. At this point, reverse training is performed on the world model based on the first loss value, and then it is determined again whether the latest first loss value is greater than or equal to the first preset value. In response to the latest first loss value being still greater than or equal to the first preset value, this step is repeated until the training stop condition is satisfied. In response to the latest first loss value being less than the first preset value, it is determined that the processing result output by the world model after the latest training has achieved the expected effect, and at this point, the world model after the latest training is determined as the final world model.

In the embodiments of the present application, the training stop condition may include that the first loss value is less than the first preset value, the number of training times is greater than the preset number of times, or the first loss value tends to any stable value.

Here, the first preset value and the preset number of times are both adjustable parameters that may be flexibly set based on the effect or accuracy of the processing result output by the world model, with no restrictions stated here.

At the third step, in response to the first loss value being less than the first preset value, it is determined that the processing result output by the initial world model is satisfactory and meets the expected effect. At this time, the training operation on the world model may be concluded, and the world model is determined as the final world model.

It should be noted that after the training of the world model is completed, the prediction module and the decoding module within the world model will cease to operate, thus becoming inactive during the usage of the world model. That is, the prediction module and the decoding module in the aforementioned world model only function during the training phase (training state) of the world model and do not need to be used during the usage phase (predictive state) of the world model. In other words, when the model is in the predictive state, the data output from the prediction module and the decoding module is not taken into consideration.

Following a detailed explanation of the world model training process, the motion strategy model training process involved in the embodiments of the present application may be specifically described in conjunction with Fig. 6. Fig. 6 is a schematic diagram of a motion strategy model training process according to an embodiment of the present application. In the embodiments of the present application, the training of the motion strategy model may be executed by a motion control apparatus for legged robots. In some embodiments, the motion control apparatus for legged robots may consist of hardware and/or software and may be integrated within electronic devices. In the present application, the electronic devices may be, but not limited to, legged robots and hardware devices used to control the legged robots, such as tablets, desktop computers, simulators, etc., with no restrictions on the types of hardware devices for controlling the legged robots.

As shown in Fig. 6, the method may include the following steps S201 and S202.

At step S201, second training data is obtained, where the second training data includes first perception information for training and state information for training.

At step S202, an initial motion strategy model is trained based on the second training data to obtain the motion strategy model.

In the present application, the first perception information for training may refer to the first perception information for training within the first training data during the training of the world model in the aforementioned embodiment, or may be first perception information for training other than the first perception information for training within the first training data, without any specific limitations thereon.

The training state information may refer to the state information of the legged robot used during the training of the motion strategy model.

The initial motion strategy model refers to a network model in which network parameters have not been adjusted in any way. In other words, the initial motion strategy model is a motion strategy model in a state of to be trained. It should be understood that the initial motion strategy model in the present application may be any network model that supports the generation of motion strategies for the legged robot.

In some embodiments, the state information of the legged robot during motion may be obtained by constructing a simulation environment in simulation software and simulating the motion of the legged robot within the simulation environment, and the obtained state information is then used as the training state information. Alternatively, the state information of the legged robot during motion may also be obtained by controlling the legged robot to move in a real environment, and the obtained state information is then used as the state information for training. There are no specific restrictions on the implementation methods for obtaining the state information for training, as long as the state information for training may be obtained.

After the second training data has been obtained, the first perception information for training and state information for training from the second training data may be input as input data into the initial motion strategy model, allowing the initial motion strategy model to process the input data to obtain an output result. Subsequently, a second loss value is calculated based on the output result, and the initial motion strategy model is trained according to the second loss value to obtain the motion strategy model.

In some optional embodiments, training the initial motion strategy model according to the second loss value to obtain the motion strategy model may include the following steps 1 to 3.

At step 1, it is determined whether the second loss value is greater than or equal to a second preset value, step 2 is performed in response to the second loss value being greater than or equal to the second preset value, and otherwise, step 3 is performed.

At step 2, in response to the second loss value being greater than or equal to the second preset value, it is determined that the training for the motion strategy model is not yet complete, that is, the motion strategy model has not achieved the expected effect. At this point, reverse training is performed on the motion strategy model based on the second loss value, and then it is determined again whether the latest second loss value is greater than or equal to the second preset value. In response to the latest second loss value still being greater than or equal to the second preset value, this step 2 is repeated until the training stop condition is satisfied. In response to the latest second loss value being less than the second preset value, it is determined that the output result of the motion strategy model from the latest training has achieved the expected effect, the training operation on the motion strategy model is concluded, and the latest trained motion strategy model is determined as the final motion strategy model.

In the embodiments of the present application, the training stop condition may include may include that the second loss value is less than the second preset value, the number of training times is greater than the preset number of times, or the second loss value tends to any stable value.

Here, the second preset value and the preset number of times are both adjustable parameters that may be flexibly set based on the effect or accuracy of the output result of the motion strategy model, with no restrictions stated here.

At step 3, in response to the second loss value being less than the second preset value, it is determined that the training of the motion strategy model has concluded, that is, the output result of the motion strategy model has achieved the expected effect, and at this point, the motion strategy model may be determined as the final motion strategy model.

In the embodiment of the present application, by obtaining the second training data and training the initial motion strategy model based on the first perception information for training and state information for training from the second training data to obtain the motion strategy model, based on the motion strategy model, an optimal motion strategy for controlling the motion of the legged robot may be obtained, allowing for accurate and effective control of the motion of the legged robot based on the optimal motion strategy.

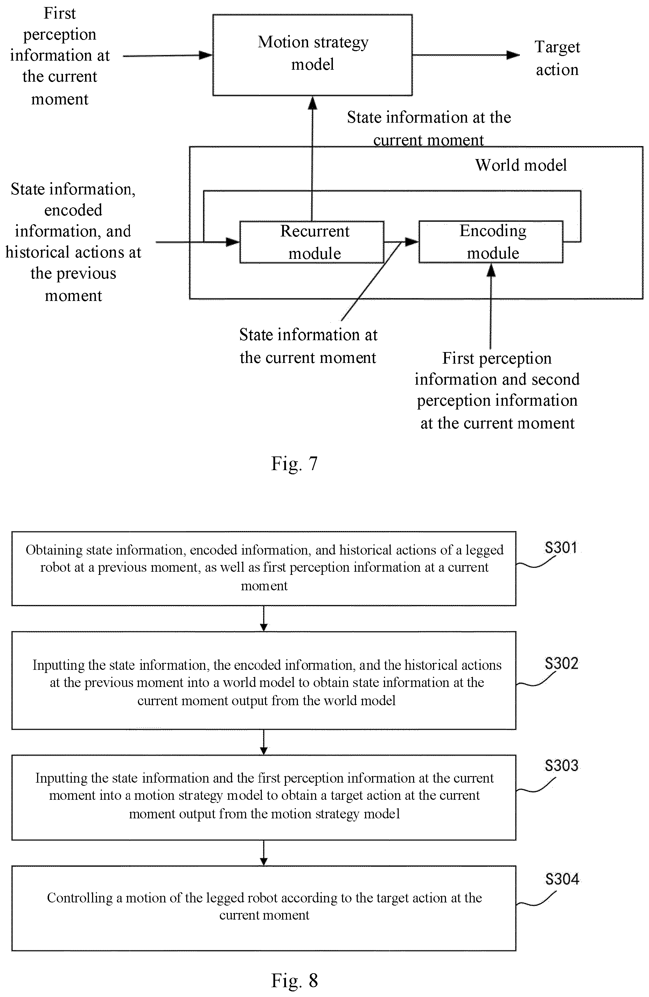

The training processes for the world model and the motion strategy model have been described in detail above. Next, in combination with Figs. 7 and 8, the process of determining the motion actions of the legged robots through the world model and the motion strategy model and controlling the motion of the legged robot based on the motion actions will be specifically described.

Fig. 7 is a schematic diagram for determining motion actions of legged robots based on a world model and a motion strategy model according to an embodiment of the present application. Fig. 8 is a schematic flowchart of a motion control method for legged robots according to an embodiment of the present application, that is, in the embodiments of this application, it mainly introduce the process of determining the action information when the legged robots executes a task by utilizing the world model and the motion strategy model obtained through the above training.

As shown in Fig. 8, the motion control method for legged robots may include the following steps S301 to S304.

At step S301, state information, encoded information, and historical actions of a legged robot at a previous moment, as well as first perception information at a current moment, are obtained.

At step S302, the state information, encoded information, and historical actions at the previous moment are input into a world model to obtain state information at the current moment output from the world model.

In some optional embodiments, when the legged robot performs any work task in a real environment, the state information, encoded information, and historical actions of the legged robot at each moment, as well as the first perception information (i.e., proprioceptive information) acquired by different sensors in the built-in sensor system of the legged robot may be obtained. Therefore, the present application may obtain the state information, encoded information, and historical actions of the legged robot at a previous moment, along with the first perception information at the current moment acquired by different sensors in the built-in sensor system of the legged robot.

Then, the state information, encoded information, and historical actions at the previous moment are input into a world model to obtain state information at the current moment output from the world model.

As shown in Fig. 4, the world model includes a recurrent module. Therefore, in the present application, the state information, encoded information, and historical actions at the previous moment are input into the world model, that is, the state information, encoded information, and historical actions at the previous moment are input into the recurrent module of the world model, allowing the recurrent module to process the state information, encoded information, and historical actions at the previous moment in order to obtain the state information at the current moment.

In other words, in the present application, the state information, encoded information, and historical actions at the previous moment are input into the recurrent module to obtain the state information at the current moment output from the recurrent module.

In some optional embodiments, obtaining, by the recurrent module, the state information at the current moment based on the state information, encoded information, and historical actions at the previous moment may be realized through the following formula (6):

$$h_t = f_\phi\left(h_{t-1}, z_{t-1}, a_{t-1}\right) \qquad\ldots\ldots\ldots\ldots\ldots\text{ (6)}$$

where $h_t$ represents the state information at the current moment output from the recurrent module; $f_\phi$ represents a processing function; $h_{t-1}$ represents the state information at the previous moment; $z_{t-1}$ represents the encoded information at the previous moment; and $a_{t-1}$ represents the historical actions at the previous moment.

It should be noted that the encoded information at the previous moment $z_{t-1}$ is generated based on the state information at the previous moment $h_{t-1}$.

At step S303, the state information and first perception information at the current moment are input into a motion strategy model to obtain a target action at the current moment output from the motion strategy model.

In some optional embodiments, the state information at the current moment output from the recurrent module of the world model and the first perception information at the current moment acquired by different sensors in the built-in sensor system of the legged robot may be input as input data to the motion strategy model. This allows the motion strategy model to process the state information and first perception information at the current moment to obtain the optimal motion strategy for controlling the motion of the legged robot. Consequently, the target action for the legged robot at the current moment is obtained based on the optimal motion strategy.

Optionally, processing, by the motion strategy model, the state information and first perception information at the current moment to obtain the optimal motion strategy for controlling the motion of the legged robot may be realized through the following formula (7):

$$\pi(\bullet \mid o_t^p, sg(h_t)) \qquad\ldots\ldots\ldots\ldots\ldots\ldots\ldots\ldots\ldots\text{ (7)}$$

where $\pi$ represents the optimal motion strategy, $o_t^p$ represents the first perception information at the current moment, $h_t$ represents the state information at the current moment, and sg() represents a stop gradient function.

Further, obtaining the target action for the legged robot at the current moment based on the optimal motion strategy may be realized through the following formula (8):

$$a_t \sim \pi(\bullet \mid o_t^p, sg(h_t)) \qquad\ldots\ldots\ldots\ldots\ldots\text{ (8)}$$

where $a_t$ represents the target action at the current moment.

At step S304, the motion of the legged robot is controlled according to the target action at the current moment.

After obtaining the target action for the legged robot at the current moment, each joint in each leg mechanism of the legged robot may be controlled to perform corresponding motion based on the target action at the current moment, in order to execute the target action at the current moment, thereby achieving control over the motion of the legged robot.

In some optional embodiments, the legged robot may include at least one leg mechanism, with each leg mechanism including at least one joint, and each joint corresponding to a drive motor. Therefore, controlling the motion of the legged robot based on the target action at the current moment may represent determining a target torque corresponding to each joint in each leg mechanism according to the target action at the current moment. Subsequently, each drive motor is controlled to output the corresponding target torque to each joint, thereby driving each joint to rotate to a specific angle, allowing other joints associated with each joint and related mechanisms to produce a certain amount of motion in space, thus realizing control over the motion of the legged robot.

Here, to determine the target torque corresponding to each joint in each leg mechanism based on the target action at the current moment, the target torque corresponding to each joint in each leg mechanism may be determined according to a PD control law based on the target action at the current moment.

In some optional embodiments, determining the target torque corresponding to each joint in each leg mechanism based on the target action at the current moment according to a PD control law may be realized through the following formula (9):

$$\tau = K_P\left(q_d - q\right) + K_d\left(\dot{q}_d - \dot{q}\right) \quad\quad\quad (9)$$

where $\tau$ represents the target torque corresponding to each joint, $K_P$ represents position control gain, $q_d$ represents a desired position of each joint, $q$ represents an actual position of each joint, $K_d$ represents velocity control gain, $\dot{q}_d$ represents a desired velocity of each joint, and $\dot{q}$ represents an actual velocity of each joint. Here, $K_P$ and $K_d$ are both adjustable.

Further, $q_d = q_{stand} + a_t$, where $q_{stand}$ represents a default position of standing joints of the legged robot, and $a_t$ represents the target action at the current moment.

Additionally, $\dot{q}_d$ may be obtained by performing differential processing on the desired position of each joint $q_d$, and $\dot{q}$ may be obtained by performing differential processing on the actual position of each joint $q$.

It should be understood that the PD control law refers to the PD control algorithm. The PD control algorithm is a simplified form of the PID control algorithm, which adjusts the output value and the rate of change of the output of the system to ensure stable operation of the system. Compared with the PID control algorithm, the PD control algorithm is simpler and clearer, making it easier to implement.

Typically, the PD control algorithm consists of two parts: the first part is a proportional part and the second part is a differential part. The proportional part calculates the difference between a current error and a set value, then multiplies it by a proportional coefficient Kp to obtain a first output signal. The differential part is based on the rate of change between the current error and a previous error, and multiplies it by a differential coefficient Kd to yield a second output signal. Finally, the first output signal and the second output signal are summed to obtain a final output signal.

According to the technical solution disclosed in the embodiments of the present application, by acquiring state information, encoded information, and historical actions of a legged robot at a previous moment, as well as first perception information of the legged robot at a current moment, inputting the state information, encoded information, and historical actions at the previous moment into a world model to obtain state information at the current moment output from the world model, inputting the state information and first perception information at the current moment into a motion strategy model to obtain a target action at the current moment output from the motion strategy model, and then controlling the motion of the legged robot according to the target action at the current moment, accurate perception of any terrain environment is realized, thereby ensuring the stability of the legged robot during motion, avoiding issues such as falling down or motion failures, and improving the effect of motion control for the legged robot.

Based on the aforementioned embodiments, considering that the motion speed of the legged robot is not very fast and the hardware processing capability is limited, determining the target action at every moment may increase the data processing burden and affect the motion performance of the legged robot. Therefore, in the present application, it may perform the target action determination operation at preset time intervals, thereby avoiding the need for target action prediction at each moment. This approach ensures stable operation of the legged robot in any terrain while enhancing data processing efficiency and improving the motion performance of the legged robot.

In the present application, the aforementioned preset time intervals may be flexibly set based on the motion speed and other motion performance of the legged robot, with no specific constraints on this aspect.

It should be noted that when determining the target action at preset time intervals, the state information and encoded information of the legged robot at the previous moment are obtained, specifically the state information and encoded information corresponding to a previous preset time interval, as well as the historical actions of the legged robot at the previous moment, which include all historical actions taken in the previous time interval.

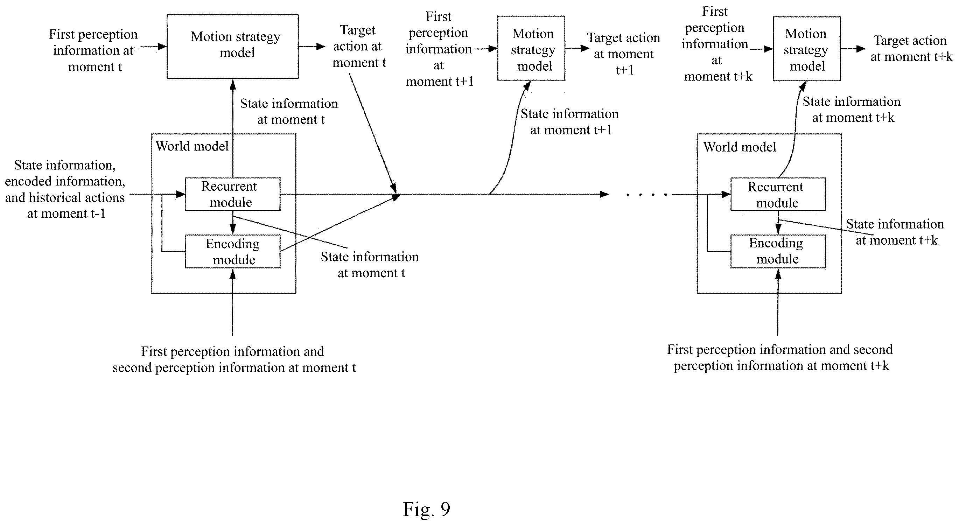

For example, if the preset time interval is k, that is, the target action is determined once every k units of time, the target action of the legged robot may be determined based on the world model and motion strategy, as shown in Fig. 9.

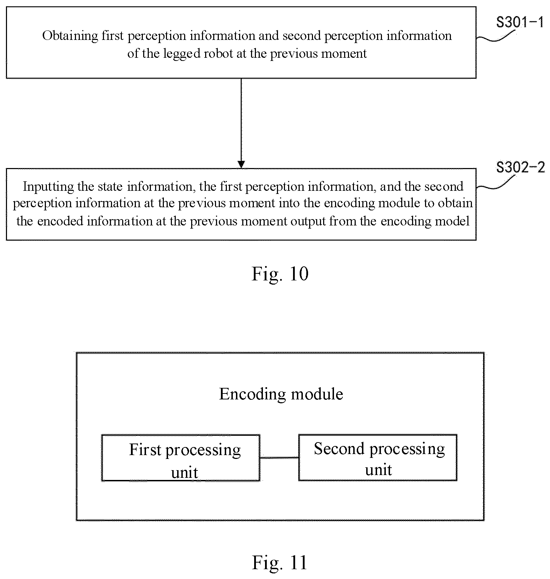

Next, in conjunction with Fig. 10, a more detailed explanation of step S301 in Fig. 8, which involves obtaining the encoded information of the legged robot at the previous moment, will be provided. As shown in Fig. 10, step S301 may include the following steps S301-1 to S301-2.

At step S301-1, first perception information and second perception information of the legged robot at the previous moment are obtained.

Optionally, the first perception information at the previous moment may be acquired by various sensors within the built-in sensor system of the legged robot. Further, based on the structure of the legged robot shown in Fig. 1, it is evident that the legged robot includes a depth camera, which may acquire the second perception information at the previous moment.

At step S301-2, the state information, first perception information, and second perception information at the previous moment are input into the encoding module to obtain the encoded information at the previous moment output from the encoding model.

As shown in Fig. 4, the world model may include an encoding module. Therefore, the state information, first perception information, and second perception information at the previous moment may be input into the encoding module of the world model, allowing the encoding module to process the state information, first perception information, and second perception information at the previous moment in order to obtain the encoded information at the previous moment.

In some optional embodiments, as shown in Fig. 11, the encoding module may include a first processing unit and a second processing unit. Then, to input the state information, first perception information, and second perception information at the previous moment into the encoding module to obtain the encoded information at the previous moment output from the encoding module may be implemented by inputting the first perception information and second perception information at the previous moment into the first processing unit to obtain fused perception information output by the first processing unit, and subsequently, inputting the fused perception information and the state information at the previous moment into the second processing unit to obtain the encoded information at the previous moment output from the second processing unit.

It should be understood that the fused perception information output by the first processing unit may be denoted as $o_{t-1}$, and $o_{t-1} = \left( o_{t-1}^p, d_{t-1} \right)$, where $o_{t-1}^p$ represents the first perception information at the previous moment and $d_{t-1}$ represents the second perception information at the previous moment.

In some optional embodiments, inputting the fused perception information and the state information at the previous moment into the second processing unit to obtain the encoded information at the previous moment output from the second processing unit may be realized through the following formula (10):

$$z_{t-1} \sim q_\phi \left( \cdot | h_{t-1}, o_{t-1} \right) \quad \ldots\ldots\ldots\ldots\ldots (10)$$

where $z_{t-1}$ represents encoded information at moment t-1 output from the second processing unit; $\sim$ represents sampling from $q_\phi(\cdot|h_{t-1}, o_{t-1})$, that is, the encoded information $z_{t-1}$ at moment t-1 is obtained from $q_\phi(\cdot|h_{t-1}, o_{t-1})$; $q_\phi$ represents an encoding distribution function; $\cdot$ represents encoding distribution; $h_{t-1}$ represents the state information at moment t-1; and $o_{t-1}$ represents the fused perception information at moment t-1.

From the above, it may be concluded that the encoded information at the previous moment is determined based on the state information, first perception information, and second perception information at the previous moment.

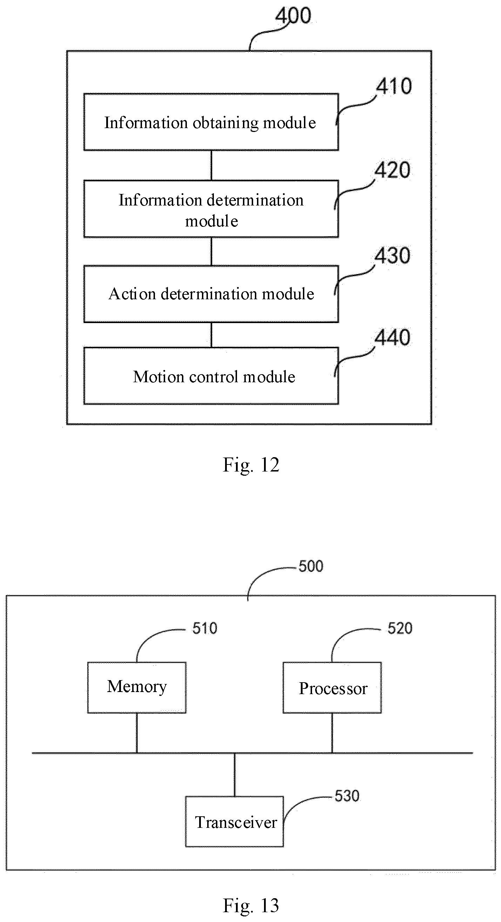

Next, with reference to Fig. 12, a description of a motion control apparatus for legged robots according to the embodiments of the present application will be provided. As shown in Fig. 12, the motion control apparatus 400 for legged robots includes: an information obtaining module 410, an information determination module 420, an action determination module 430, and a motion control module 440.

Here, the information obtaining module 410 is configured to obtain state information, encoded information, and historical actions of a legged robot at a previous moment, as well as first perception information at a current moment.

The information determination module 420 is configured to input the state information, encoded information, and historical actions at the previous moment into a world model to obtain state information at the current moment output from the world model.

The action determination module 430 is configured to input the state information and first perception information at the current moment into a motion strategy model to obtain a target action at the current moment output from the motion strategy model.

The motion control module 440 is configured to control the motion of the legged robot according to the target action at the current moment.

In an optional implementation of the embodiments of the present application, the world model includes an encoding module, and the information obtaining module 410 includes an obtaining unit and a processing unit.

Here, the obtaining unit is configured to obtain first perception information and second perception information of the legged robot at the previous moment.

The processing unit is configured to input the state information, first perception information, and second perception information at the previous moment into the encoding module to obtain the encoded information at the previous moment output from the encoding model.

In an optional implementation of the embodiments of the present application, the encoding module includes a first processing unit and a second processing unit. The processing units are specifically configured to: input the first perception information and second perception information at the previous moment into the first processing unit to obtain fused perception information output by the first processing unit; and input the fused perception information and the state information at the previous moment into the second processing unit to obtain the encoded information at the previous moment output from the second processing unit.

In an optional implementation of the embodiments of the present application, the legged robot includes a depth camera, and the second perception information is a depth image.

In an optional implementation of the embodiments of the present application, the world model further includes a recurrent module, and the information determination module 420 is specifically configured to: input the state information, encoded information, and historical actions at the previous moment into the recurrent module to obtain the state information at the current moment output from the recurrent module.

In an optional implementation of the embodiments of the present application, the legged robot further includes at least one leg mechanism, each leg mechanism includes at least one joint, and each joint corresponds to a drive motor; and the motion control module 440 is specifically configured to: determine a target torque for each joint in each leg mechanism based on the target action at the current moment; and controlling each drive motor to output the corresponding target torque to each joint.

In an optional implementation of the embodiments of the present application, the motion control apparatus 400 for legged robots further includes a first obtaining module and a first training module.

Here, the first obtaining module is configured to obtain first training data, the first training data including first perception information for training, second perception information for training, and action information for training.

The first training module is configured to train an initial world model based on the first training data to obtain the world model.

In an optional implementation of the embodiments of the present application, the motion control apparatus 400 for legged robots further includes a second obtaining module and a second training module.

Here, the second obtaining module is configured to obtain second training data, the second training data including first perception information for training and state information for training.

The second training module is configured to train an initial motion strategy model based on the second training data to obtain the motion strategy model.

It should be understood that the apparatus embodiments correspond to the method embodiments described above, and similar descriptions may refer to the method embodiments. To avoid redundancy, details will not be elaborated upon here. Specifically, the apparatus 400 shown in Fig. 12 may execute the method embodiments corresponding to Fig. 8, and the aforementioned and other operations and/or functions of each module in the apparatus 400 are designed to implement the respective processes in the various methods illustrated in Fig. 8. For brevity, details are repeated here.

The apparatus 400 in the embodiment of the present application was described from the perspective of functional modules above with reference to attached drawings. It should be understood that these functional modules may be realized in hardware, software instructions, or a combination of both hardware and software modules. Specifically, each step of the method embodiment in the present application may be completed by integrated logic circuits in the hardware of a processor and/or software instructions. The steps of the method disclosed in the present application may be directly executed by a hardware decoding processor, or executed through a combination of hardware and software modules within the decoding processor. Alternatively, the software modules may reside in mature storage medium such as random-access memory, flash memory, read-only memory, programmable read-only memory, electrically erasable programmable memory, or registers. The storage medium is located in a memory, and the processor reads the information stored therein to complete the steps of the method embodiment with its hardware.

Fig. 13 is a schematic block diagram of an electronic device according to an embodiment of the present application. As shown in Fig. 13, the electronic device 500 may include a memory 510 and a processor 520, where the memory 510 is configured to store a computer program and transmit the program code to the processor 520. In other words, the processor 520 may invoke the computer program from the memory 510 and execute the same to implement the motion control method for legged robots described in the embodiments of the present application.

For example, the processor 520 may be configured to execute the motion control method for legged robots based on instructions in the computer program.

In some embodiments of the present application, the processor 520 may be, but not limited to: a general-purpose processor, a digital signal processor (DSP), an application specific integrated circuit (ASIC), a field-programmable gate array (FPGA) or other programmable logic devices, discrete gate or transistor logic devices, discrete hardware components, etc.

In some embodiments of the present application, the memory 510 may be, but not limited to: a volatile memory and/or non-volatile memory. The non-volatile memory may be read-only memory (ROM), programmable ROM (PROM), erasable PROM (EPROM), electrically EPROM (EEPROM), or flash memory. The volatile memory may be random access memory (RAM), which serves as external high-speed cache. By way of illustration, but not limitation, various forms of RAM are available, such as static RAM (SRAM), dynamic RAM (DRAM), synchronous DRAM (SDRAM), double data rate SDRAM (DDR SDRAM), enhanced SDRAM (ESDRAM), synch link DRAM (SLDRAM), and direct Rambus RAM (DR RAM).

In some embodiments of the present application, the computer program may be divided into one or more modules, which are stored in the memory 510 and executed by the processor 520 to complete the motion control method for legged robots according to any embodiment of the present application. The one or more modules may be a series of computer program instruction segments that may accomplish specific functions, and the instruction segments are configured to describe the execution process of the computer program in the electronic device.

As shown in Fig. 13, the electronic device 500 may further include: a transceiver 530 which may be connected to the processor 520 or the memory 510.

The processor 520 may control the transceiver 530 to communicate with other devices, specifically, the processor may send information or data to other devices or receive information or data sent by other devices. The transceiver 530 may include a transmitter and a receiver. The transceiver 530 may further include antennas, and the number of antennas may be one or more.

It should be understood that all components in the electronic device are connected through a bus system, and the bus system includes a power bus, a control bus and a status signal bus in addition to a data bus.

The present application also provides a computer storage medium, on which a computer program is stored, which, when executed by a computer, enables the computer to implement the motion control method for legged robots described above.

The present application also provides a computer program product containing program instructions which, when run on an electronic device, enable the electronic device to implement the motion control method for legged robots described above.

When implemented by software, the embodiments may be fully or partially implemented in the form of a computer program product. The computer program product includes one or more computer instructions. When the computer program instructions are loaded and executed on a computer, all or part of the processes or functions described in the embodiments of the present application are generated. The computer may be a general-purpose computer, a special-purpose computer, a computer network, or other programmable devices. The above computer instructions may be stored in a computer-readable storage medium or transmitted from one computer-readable storage medium to another computer-readable storage medium. For example, the above computer instructions may be transmitted from one website, computer, server or data center to another website, computer, server or data center by wired (such as coaxial cable, optical fiber, digital subscriber line (DSL)) or wireless (such as infrared, wireless, microwave) means. The computer-readable storage medium may be any available medium that a computer may access or a data storage device such as a server or a data center that contains one or more available media. The available media may be magnetic media (such as floppy disk, hard disk, magnetic tape), optical media (such as digital video disc (DVD)), or semiconductor media (such as solid state disk (SSD)) and the like.

Those of ordinary skill in the art may realize that the modules and algorithm steps described in connection with the embodiments disclosed herein may be implemented in electronic hardware, or a combination of computer software and electronic hardware. Whether these functions are implemented by hardware or software depends on the specific application and design constraints of the technical solution. Those skilled in the art may use different methods to realize the described functions for each specific application, but this implementation should not be considered beyond the scope of the present application.

In several embodiments provided by the present application, it should be understood that the disclosed system, apparatus and method may be realized in other ways. For example, the apparatus embodiment described above is only schematic. For example, the division of the modules is only a logical function division, and there may be other division methods in actual implementation. For another example, multiple modules or components may be combined or integrated into another system, or some features may be ignored or not implemented. Furthermore, the displayed or discussed coupling or direct coupling to each other or communication may be indirect coupling or communication through some interfaces, apparatuses, or modules, which may be electrical, mechanical, or in other forms.

The modules described as separate components may or may not be physically separated, and the components displayed as modules may or may not be physical modules, i.e., may be located in one place or may be distributed over plurality of network units. Some or all of the modules may be selected according to actual needs to achieve the objective of the solution of this embodiment. For example, all functional modules in each embodiment of the present application may be integrated into one processing module, or exist physically separated, or two or more modules may be integrated into one module.

In the embodiments of the present application, the term "module" or "unit" refers to a computer program or a part of a computer program with a predetermined function, and works with other related parts to achieve a predetermined goal, and may be realized in whole or in part by using software, hardware (such as a processing circuit or a memory) or a combination thereof. Similarly, a processor (or multiple processors or memories) may be used to implement one or more modules or units. Further, each module or unit may be a part of an overall module or unit that contains the functions of the module or unit.

The above description merely exemplifies specific implementations of the present application, but the protection scope of the present application is not limited to thereto. Therefore, the protection scope of the present application shall be subject to the protection scope of the claims.

**Claims**

1. A motion control method for a legged robot, comprising:

   obtaining state information, encoded information, and historical actions of the legged robot at a previous moment, as well as first perception information at a current moment (S301);
   inputting the state information, the encoded information, and the historical actions at the previous moment into a world model to obtain state information at the current moment output from the world model (S302);
   inputting the state information and the first perception information at the current moment into a motion strategy model to obtain a target action at the current moment output from the motion strategy model (S303); and
   controlling a motion of the legged robot according to the target action at the current moment (S304).

2. The motion control method according to claim 1, wherein the world model comprises an encoding module, and the obtaining encoded information of the legged robot at a previous moment, comprises:

   obtaining first perception information and second perception information of the legged robot at the previous moment (S301-1); and
   inputting the state information, the first perception information, and the second perception information at the previous moment into the encoding module to obtain encoded information at the previous moment output from the encoding model (S301-2).

3. The motion control method according to claim 2, wherein the encoding module comprises a first processing unit and a second processing unit, and the inputting the state information, the first perception information, and the second perception information at the previous moment into the encoding module to obtain encoded information at the previous moment output from the encoding module, comprises:

   inputting the first perception information and the second perception information at the previous moment into the first processing unit to obtain fused perception information output by the first processing unit; and
   inputting the fused perception information and the state information at the previous moment into the second processing unit to obtain the encoded information at the previous moment output from the second processing unit.

4. The motion control method according to claim 2 or 3, wherein the legged robot comprises a depth camera, and the second perception information is a depth image.

5. The motion control method according to any one of claims 1-4, wherein the world model further comprises a recurrent module, and the inputting the state information, the encoded information, and the historical actions at the previous moment into a world model to obtain state information at the current moment output from the world model, comprises: inputting the state information, the encoded information, and the historical actions at the previous moment into the recurrent module to obtain the state information at the current moment output from the recurrent module.

6. The motion control method according to any one of claims 1-5, wherein the legged robot further comprises at least one leg mechanism, each of the at least one leg mechanism comprises at least one joint, and each of the at least one joint corresponds to a drive motor; and the controlling a motion of the legged robot according to the target action at the current moment, comprises:

   determining a target torque for each of the at least one joint in each of the at least one leg mechanism based on the target action at the current moment; and
   controlling the drive motor to output a corresponding target torque to each of the at least one joint.

7. The motion control method according to any one of claims 1-6, further comprising:

   obtaining first training data, the first training data comprising first perception information for training, second perception information for training, and action information for training (S101); and
   training an initial world model based on the first training data to obtain the world model (S102).

8. The motion control method according to claim 7, further comprising:

   obtaining second training data, the second training data comprising the first perception information for training and state information for training (S201); and
   training an initial motion strategy model based on the second training data to obtain the motion strategy model (S202).

9. The motion control method according to claim 7 or 8, wherein the first training data is obtained by:

   obtaining first perception information as the first perception information for training through different sensors in a built-in sensor system of the legged robot while controlling the legged robot to move in a real environment, obtaining second perception information as the second perception information for training through a depth camera on the legged robot, and obtaining motion information of the legged robot in the real environment as the action information for training; and/or
   creating a simulation environment in simulation software, and generating corresponding depth maps as the second perception information for training by simulating scenes under different lighting conditions, materials, and viewpoints, obtaining the first perception information as the first perception information for training through the different sensors in the built-in sensor system of the legged robot while simulating the motion of the legged robot in the simulation environment, obtaining motion information as the action information for training during the motion of the legged robot.

10. The motion control method according to any one of claims 7-9, wherein the training an initial world model based on the first training data to obtain the world model, comprises:

    inputting the first training data into the initial world model to obtain result information output by the initial world model; and
    training the initial world model based on the result information to obtain the world model

11. The motion control method according to any one of claims 7-10, wherein when the initial world model comprises a recurrent module, an encoding module, a prediction module, and a decoding module, the training an initial world model based on the first training data to obtain the world model, comprises:

    inputting the action information for training in the first training data into the recurrent module, and obtaining state information output by the recurrent module (S102-1);
    inputting the state information output by the recurrent module, the first perception information for training and the second perception information for training in the first training data into the encoding module, and obtain encoded information output by the encoding module, and inputting the state information output by the recurrent module into the prediction module and obtaining predicted encoded information output by the prediction module (S102-2);
    inputting the state information output by the recurrent module and the encoded information output by the encoding module into the decoding module, and obtaining decoded information output by the decoding module (S102-3); and
    training the initial world model based on the decoded information output by the decoding module, the encoded information output by the encoding module, and the predicted encoded information output by the prediction module, and obtaining the world model (S102-4).

12. The motion control method according to claim 11, wherein the training the initial world model based on the decoded information output by the decoding module, the encoded information output by the encoding module, and the predicted encoded information output by the prediction module, and obtaining the world model, comprises:

    calculating a first loss value based on the decoded information output by the decoding module, the encoded information output by the encoding module, and the predicted encoded information output by the prediction module; and

subjecting the initial world model to reverse training based on the first loss value to adjust the network parameters within the initial world model, to obtain the world model.

13. A motion control apparatus for legged robots (400), comprising:

an information obtaining module (410), configured to obtain state information, encoded information, and historical actions of the legged robot at a previous moment, as well as first perception information at a current moment;
an information determination module (420), configured to input the state information, the encoded information, and the historical actions at the previous moment into a world model to obtain state information at the current moment output from the world model;
an action determination module (430), configured to input the state information and the first perception information at the current moment into a motion strategy model to obtain a target action at the current moment output from the motion strategy model; and
a motion control module (440), configured to control a motion of the legged robot according to the target action at the current moment.

14. An electronic device (400), comprising:

at least one processor (520); and
a memory (510), wherein the memory is configured to store a computer program, and the at least one processor is configured to invoke and run the computer program stored in the memory to execute the motion control method according to any of claims 1 to 12.

15. A non-transitory computer-readable storage medium for storing a computer program that causes a computer to execute the motion control method according to any of claims 1 to 12.

1000

110

1201

140

160

1301

150

130

1302

120

1202

Fig. 1

First loss value

First loss value | Initial world model | Result information

First training data

Fig. 2

Obtaining first training data, where the first training data includes first perception information for training, second perception information for training, and action information for training

S101

Training an initial world model based on the first training data to obtain the world model

S102

Fig. 3

Initial world model

Encoding module

Input → Recurrent module → Prediction module → Output

Decoding module

Fig. 4

Inputting the action information for training in the first training data into the recurrent module to obtain state information output by the recurrent module

S102-1

Inputting the state information output by the recurrent module, as well as the first perception information for training and the second perception information for training in the first training data, into the encoding module to obtain encoded information output by the encoding module, and inputting the state information output by the recurrent module into the prediction module to obtain predicted encoded information output by the prediction module

S102-2

Inputting the state information output by the recurrent module, as well as the encoded information output by the encoding module into the decoding module to obtain decoded information output by the decoding module

S102-3

Training the initial world model based on the decoded information output by the decoding module, the encoded information output by the encoding module, and the predicted encoded information output by the prediction module to obtain the world model

S102-4

Fig. 5

Obtaining second training data, where the second training data including first perception information for training and state information for training

S201

Training an initial motion strategy model based on the second training data to obtain the motion strategy model

S202

Fig. 6

First perception information at the current moment → Motion strategy model → Target action

State information at the current moment

World model

State information, encoded information, and historical actions at the previous moment → Recurrent module → Encoding module

State information at the current moment

First perception information and second perception information at the current moment

Fig. 7

Obtaining state information, encoded information, and historical actions of a legged robot at a previous moment, as well as first perception information at a current moment — S301

Inputting the state information, the encoded information, and the historical actions at the previous moment into a world model to obtain state information at the current moment output from the world model — S302

Inputting the state information and the first perception information at the current moment into a motion strategy model to obtain a target action at the current moment output from the motion strategy model — S303

Controlling a motion of the legged robot according to the target action at the current moment — S304

Fig. 8

First perception information at moment t → Motion strategy model → Target action at moment t

First perception information at moment t+1 → Motion strategy model → Target action at moment t+1

First perception information at moment t+k → Motion strategy model → Target action at moment t+k

State information at moment t

State information at moment t+1

State information at moment t+k

World model

State information, encoded information, and historical actions at moment t-1 → Recurrent module

Encoding module

State information at moment t

World model

Recurrent module

Encoding module

State information at moment t+k

First perception information and second perception information at moment t

First perception information and second perception information at moment t+k

Fig. 9

22

Obtaining first perception information and second perception information of the legged robot at the previous moment

S301-1

Inputting the state information, the first perception information, and the second perception information at the previous moment into the encoding module to obtain the encoded information at the previous moment output from the encoding model

S302-2

Fig. 10

Encoding module

First processing unit

Second processing unit

Fig. 11

EP 4 715 508 A1

400

Information obtaining module 410

Information determination module 420

Action determination module 430

Motion control module 440

Fig. 12

500

Memory 510

Processor 520

Transceiver 530

Fig. 13

24

EUROPEAN SEARCH REPORT

Application Number

EP 25 20 3050

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 117 506 889 A (IFLYTEK CO LTD) 6 February 2024 (2024-02-06) * figure 4 * * paragraphs [0071] - [0073], [0136] - [0139] * | 1-15 | INV. G05D1/243 G05D1/495 |
| X | SHI HAOJIE ET AL: "An Efficient Model-Based Approach on Learning Agile Motor Skills without Reinforcement", 2024 IEEE INTERNATIONAL CONFERENCE ON ROBOTICS AND AUTOMATION (ICRA), IEEE, 13 May 2024 (2024-05-13), pages 5724-5730, XP034663702, DOI: 10.1109/ICRA57147.2024.10611560 [retrieved on 2024-08-08] * abstract * * Chapter V * | 1-15 | |
| X | MATEJ HOFFMANN ET AL: "Using Sensorimotor Contingencies for Terrain Discrimination and Adaptive Walking Behavior in the Quadruped Robot Puppy", 27 August 2012 (2012-08-27), FROM ANIMALS TO ANIMATS 12, SPRINGER BERLIN HEIDELBERG, BERLIN, HEIDELBERG, PAGE(S) 54 - 64, XP047014734, ISBN: 978-3-642-33092-6 * abstract * * Chapter I * | 1-15 | |
| A | CN 116 945 167 A (TENCENT TECH SHENZHEN CO LTD) 27 October 2023 (2023-10-27) * paragraph [0116] * | 1,13-15 | |
| A | CN 118 625 847 A (UNIV NORTHWESTERN POLYTECHNICAL) 10 September 2024 (2024-09-10) * paragraphs [0004], [0006], [0007] * | 1,13-15 | |

TECHNICAL FIELDS SEARCHED (IPC)

G05D
B62D

The present search report has been drawn up for all claims

| Place of search | Date of completion of the search | Examiner |
|---|---|---|
| Munich | 14 November 2025 | Schwarzenberger, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

    ......................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 20 3050

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2025

| Patent document cited in search report | | Publication date | Patent family member(s) | | Publication date |
|---|---|---|---|---|---|
| CN 117506889 | A | 06-02-2024 | NONE | | |
| CN 116945167 | A | 27-10-2023 | CN | 116945167 A | 27-10-2023 |
| | | | WO | 2025011165 A1 | 16-01-2025 |
| CN 118625847 | A | 10-09-2024 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411322767